(19)

**Europäisches Patentamt**

**European Patent Office**

**Office européen des brevets**

(11) **EP 4 625 980 A1**

(12) **EUROPEAN PATENT APPLICATION**

(43) Date of publication:
**01.10.2025 Bulletin 2025/40**

(21) Application number: **24305435.0**

(22) Date of filing: **25.03.2024**

(51) International Patent Classification (IPC):
**H04N 19/117** (2014.01) **H04N 19/14** (2014.01)
**H04N 19/172** (2014.01) **H04N 19/182** (2014.01)
**H04N 19/82** (2014.01)

(52) Cooperative Patent Classification (CPC):
**H04N 19/82; H04N 19/117; H04N 19/14;**
**H04N 19/172; H04N 19/182**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BORDES, Philippe**
  **35890 LAILLE (FR)**
• **BOISSON, Guillaume**
  **35137 PLEUMELEUC (FR)**
• **LEFEBVRE, Frederic**
  **35000 RENNES (FR)**
• **GALPIN, Franck**
  **35235 THORIGNE-FOUILLARD (FR)**

(74) Representative: **Vossius & Partner**
**Patentanwälte Rechtsanwälte mbB**
**Siebertstraße 3**
**81675 München (DE)**

(54) **CONTENT-ADAPTED ALF BAND CLASSIFIER**

(57) Methods and apparatus are provided to classify signals within a video compression/decompression loop for filtering. In at least one embodiment, reconstructed video signals are classified according to amplitude values. The classifications cover a plurality of bands, which can be uniformly or non-uniformly spread over the range of the signals. In another embodiment, reconstructed residual signals are classified similarly. The classifications are used to implement different filtering parameters, based on the classification.

**FIG. 5**

**Description**

<u>TECHNICAL FIELD</u>

At least one of the present embodiments generally relates to a method or an apparatus for video compression and processing.

<u>BACKGROUND</u>

The general aspects described herein relate to approaches for filtering signals within a video compression/de-compression loop.

<u>SUMMARY</u>

At least one of the present embodiments generally relates to a method or an apparatus for content-adapted loop filter band classification of video samples.

According to a first aspect, there is provided a method. The method comprises steps for determining at least one classifier of video samples in a video compression loop; filtering reconstructed video samples based on the at least one classifier; and, encoding the video samples using the filtered reconstructed video samples.

According to a second aspect, there is provided another method. The method comprises steps for determining at least one classifier of video samples in a video compression loop; filtering reconstructed video samples based on the at least one classifier; and, encoding the video samples using the filtered reconstructed video samples.

According to another aspect, there is provided an apparatus. The apparatus comprises a processor and a memory. The processor can be configured to operate on digital video data according to the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

<u>BRIEF DESCRIPTION OF THE DRAWINGS</u>

Figure 1 illustrates a standard, generic, video compression scheme.
Figure 2 illustrates a standard, generic, video decompression scheme.
Figure 3 illustrates an example of the pixel range from 0 to 255 using 8 bits and uniformly split into 32 bands for the case of band offset (BO) mode
Figure 4 illustrates an example of candidate luma sample positions used for the CCSAO BO classifier.
Figure 5 illustrates an example of a classifier with adaptive parameters derived from the whole picture under the general described aspects.
Figure 6 illustrates a uniform 3D histogram (left) and a 3D histogram adapted to the (min,max) values of the components (right).
Figure 7 illustrates an example of a non-uniform 3D histogram for the luma component.
Figure 8 illustrates one embodiment of a first method under the described aspects.
Figure 9 illustrates one embodiment of a second method under the described aspects
Figure 10 illustrates one embodiment of an apparatus under the described aspects.

Figure 11 illustrates a processor-based system for encoding/decoding under the general described aspects.

DETAILED DESCRIPTION

The embodiments described here are in the field of in-loop filtering. Several different types of filtering can occur in compressed video encoders/decoders.

**In-Loop Post-Filtering**

In recent video codecs, a reconstructed picture can be enhanced with post-filtering. The post-filtering stage is said to be in-loop when the filtered pictures are to be stored into the decoded picture buffer (DPB) to be further used for inter-prediction.
Some post-filtering uses additional data, such as filter parameters (ex: linear filter coefficients, sample offsets, etc.), that can be implicit (pre-defined values supposedly known at the decoder side) also known as fixed filters or explicit (values coded in the bitstream) also known as non-fixed or adaptive filters or sample adaptive offset (SAO) filters for example.
The picture samples can be classified into N classes $Cl_i=_{0,..N-1}$ and a set of N filter parameters $P_{i=0,..N-1}$ can be selected (implicit case) or coded in the bitstream (explicit case). In a variant, a sub-set of filter parameters are implicit, the remaining filter parameters are explicit.
For each sample, if the sample is classified as $Cl_k$ then the sample is filtered with filter parameter $P_k$.

**SAO and CCSAO filter**

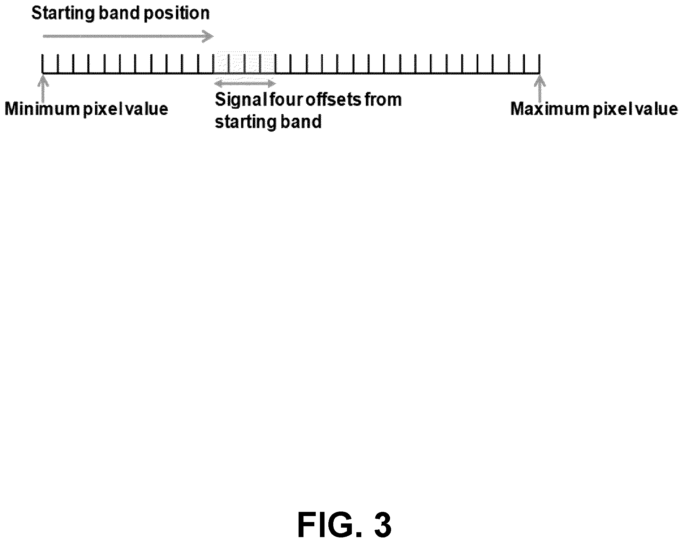

The SAO (Sample Adaptive Offset) band-offset (BO) mode uses band classifier where the sample range of values for component 'c' (ex: 0..255, in 8-bits) is uniformly split into N(c)=32 bands and the sample values belonging to (NC) =4 consecutive bands are modified by adding an offset, off(n) explicitly coded in the bitstream ($P_{i=0...3}$=off(i)). Figure 3 shows an example of 4 consecutive bands. (NC) signed offset values and the starting band are coded, one for each of the (NC) bands (the remaining bands have offset equal to zero).
Similar to SAO, the CCSAO (Cross Component Sample Adaptive Offset) classifies the reconstructed samples into different categories, properly derives one offset for each category and adds the offset to the reconstructed samples in that category. However, different from SAO which only uses one single luma/chroma component of a current sample as input, the CCSAO utilizes all three components to classify the current sample into different categories.
For example, in case of CCSAO BO mode, for a given luma/chroma sample, three candidate samples are selected to classify the given sample into different categories: one collocated Y sample, one collocated U sample, and one collocated V sample. The sample values of these three selected samples are then classified into three different {band_Y, band_U, band_V} bands, and a joint index "i" is used to indicate the category of the given color sample. One offset is signaled and added to the reconstructed samples that fall into that category, which can be formulated as:

$$band_Y = (Y_{col} \cdot N_Y) \gg BD$$
$$band_U = (U_{col} \cdot N_U) \gg BD$$
$$band_V = (V_{col} \cdot N_V) \gg BD \qquad (1)$$
$$i = band_Y \cdot (N_U \cdot N_V) + band_U \cdot N_V + band_V$$
$$C'_{rec} = Clip1(C_{rec} + \sigma_{CCSAO}[i])$$

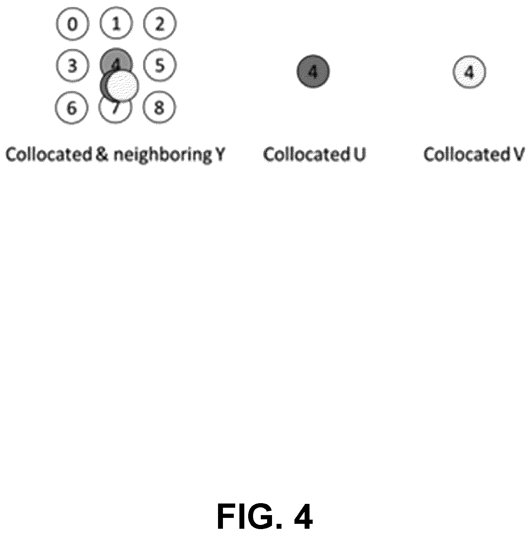

In equation (1), { $Y_{col}$, $U_{col}$, $V_{col}$} are the three selected collocated samples that are used to classify the current sample; {$N_Y$, $N_U$, $N_V$} are the numbers of equally divided bands applied to { $Y_{col}$, $U_{col}$, $V_{col}$} full range respectively; BD is the internal coding bit-depth; $C_{rec}$ and $C'_{rec}$ are the reconstructed samples before and after the CCSAO is applied; $\sigma_{CCSAO}[i]$ is the value of CCSAO offset that is applied to the i-th BO category. In the current design, the collocated luma sample can be chosen from 9 candidate positions, while the collocated chroma sample positions are fixed, as depicted in Figure 4.
Similar to SAO, different classifiers can be applied to different local regions to further enhance the whole picture quality. The parameters for each classifier (i.e., the position of $Y_{col}$, $N_Y$, $N_U$, $N_V$, and offsets) are signaled at frame level, and which classifier to be used is explicitly signaled and switched at CTB (Coding Tree Block) level. Some constraints can apply. For example, for each classifier, the maximum of {$N_Y$,$N_U$,$N_V$} is set to {16, 4, 4}, and offsets are constrained to be within the range [-15, 15]. The maximum number of classifiers per frame is constrained to be 4.

**ALF and CC-ALF filter**

The Adaptive Loop Filter (ALF) in ECM can classify the reconstructed samples (luma and/or chroma) into different classes. Then one class index ($CI_k$) is associated to each reconstructed sample and a set of filter parameters $P_k$ is associated to each class index. For example, $P_k$ can be a set of linear filter coefficients:

$$F_k(x) = \sum_{i=-n}^{n} c_i . x_i \qquad (2)$$

Where $P_k=\{c_i\}_{i=-n...+n}$ are the filter coefficients, xi are the sample neighbors to x, $x=x_0$ and $F_k(x)$ is the filtered value of x.

Several classifiers can be used, and the type of classifier can be signaled in the bitstream. For example, ALF non-fixed filters can use Laplacian or band classifiers. In a variant, other reconstructed sample-based data can be used for classification such as residual samples for example. The band classifier classifies the luma reconstructed samples into equally spaced bands between 0 and (1<<bit depth), where bit depth is the integer bit depth representation of one reconstructed sample data.

**Adaptive clipping**

Minimum and maximum sample values can be coded in the bitstream (ex: slice header). The clipping operation is applied in filtering, sampling, interpolation, weighted prediction, weighted combination, reconstruction, and other stages, to ensure that the generated prediction and/or reconstruction samples remain in the defined dynamic range. At the encoder, the min/max values can be obtained by scanning the sample values in the original picture. If a motion compensated temporal filter (MCTF) is applied to a picture, the min/max values can be obtained by scanning the sample values in the MCTF pre-filtered picture.

The state-of-art ALF classifiers (e.g., ALF band classifier) do not consider the occurrence of the sample values (use of fixed bands), then some bands can contain a relatively few number of samples that can jeopardize the efficiency of the classification.

ALF classification uses the luma component. In some cases, the type of coding artifacts can be correlated with some objects in the picture, and that can be better tracked with a color classification.

It is proposed to modify (in-loop) post-filter classifier(s) or add other classifier(s) better correlated to the picture semantic (ex: color, sample value statistics). The parameters of this adaptive classifier can be derived from one picture and stored to be used for the current and/or some subsequent (decoding order) pictures.

The Adaptive classifier can derive banding classification with clipping info; un-equal banding with histogram or equal bands in between min/max.

The Adaptive classifier can also derive color banding classification, derive (color) band or un-equal banding classification with 1D or 3D histogram, and can derive (color) band classifiers with a last I-frame or co-located reference picture.

**Embodiment 0 - derivation of the classifier parameters using whole picture**

In the state-of-art, ALF uses fixed parameters (410) for classifying the reconstructed sample data. The parameters are fixed, meaning they are the same for all the pictures of the sequence, they are not adapted to the current picture characteristics. These fixed parameters include the maximum number of classes (e.g., 25), the luma band size (band classifier), the process for deriving the directions from fixed Laplacian weighting, etc.

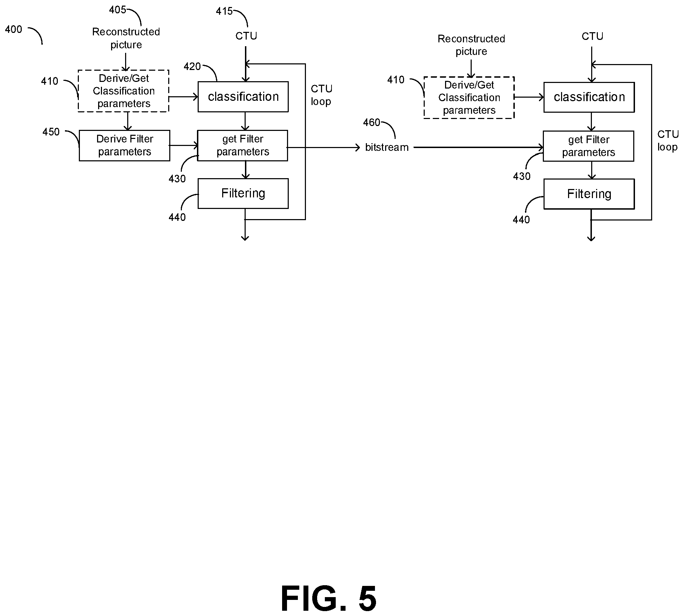

In this embodiment, shown in Figure 5, for the classification to be better correlated with the picture semantic (e.g., color, sample value statistics), this embodiment proposes the (semantic) classifier parameters are no longer fixed (410) but can be adapted to, or derived from, the statistics of some (reconstructed) samples values of a region larger than one CTU. For example, one can derive the classifier parameters using one slice or the full reconstructed picture (405).

The adaptive classifier parameters (410) can be used for (classifying the samples of) the current picture and/or stored to be used for (classifying the samples of) some subsequent (decoding order) pictures.

For some implementations, one might prefer not using the new parameters derived with the current picture (410) or a region larger than one coding tree unit (CTU) (405) to classify samples of the current picture since it needs the post-filtering process to wait for the whole picture (or region) to be reconstructed. In that case, the new derived adaptive classifier parameters can be used for some subsequent (decoding order) pictures only. In a variant, in case the current picture is inter frame (e.g., P or B slice type), one can use the collocated reference picture or the last I-picture (or any other picture stored in the decoded picture buffer DPB) to derive the adaptive classifier parameters, since it is available at the beginning of the decoding of the current frame.

For the remaining part, once the filter parameters have been determined, the filtering process is same as a regular process. For each sample in the CTU (415), the class identifier allows selecting the filter coefficients (430) that can be read in the bitstream (460) and the filtering applies (440).

In a variant, all or some of the adaptive classifier parameters are not derived from one reconstructed picture, but they are read in the bitstream. For example, one can use the adaptive clipping information in the bitstream to adapt the classifier parameters.

**Embodiment 1** - **Classifier parameters derived from adaptive clipping data**

According to Embodiment 0, the adaptive parameters of the classifier can include the minimum and/or maximum sample value of one component (e.g., luma component). For example, the band classifier process is adapted to these values by reducing the number and/or the band size to remain in the [min;max] sample range. For example, one can define uniform (equally spaced) bands as shown in Equation (3):

$$band\_size = \frac{(max - min)}{nb\_class}$$

$$Cl(x) = \frac{(x - min)}{band\_size} \qquad (3)$$

Where *band_size* is the uniform band size, *nb_class* is the number of classes (e.g., 25) and *Cl(x)* is the band index of the sample *x*. The adaptive parameters of the classifier include the *band_size* and the (min;max) values.

The value of (min;max) can be derived from the analysis of one reconstructed picture (or slice, or region in the picture) (410) or it can be derived from the adaptive clipping information coded in the bitstream.

**Embodiment 2** - **Non-uniform banding classification**

According to Embodiment 0 or Embodiment 1, the filter band classifier is non uniform: the bands can have different sizes. The band classifier can derive the bands from the histogram of the reconstructed picture. For example, the classifier can use histogram equalization so that each band can contain approximately the same number of samples.

Advantageously, the classifier can build a look-up table (LUT) allowing to store the mapping between the sample value and the classification index. In this case, the adaptive parameters of the classifier include the LUT.

**Embodiment 3** - **Color Banding Classification**

According to Embodiment 0 or Embodiment 1 or Embodiment 2, the band classifier can use more than one component to perform banding classification. For example, the band classifier can use 3D (uniform or non-uniform) histogram corresponding to the three components (e.g., RGB or YCbCr). In this case, the adaptive parameters of the classifier can be a 3D LUT which associates an index of the classifier for each value of reconstructed color samples triplet (RGB or YUV).

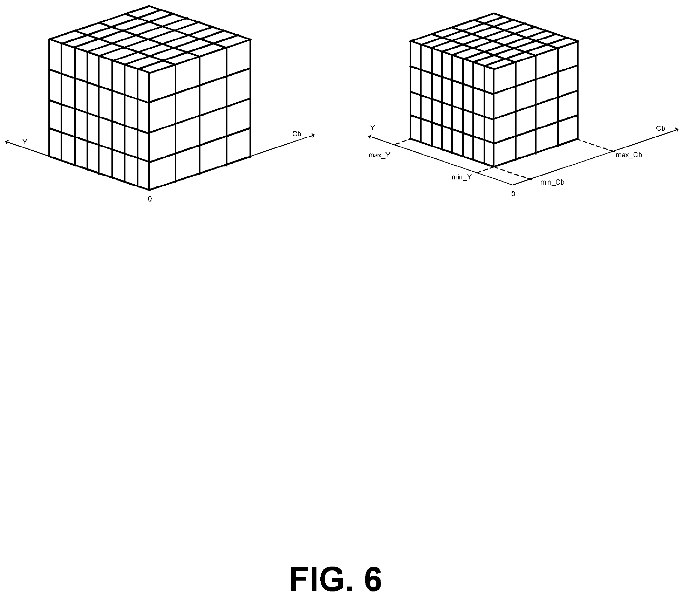

Similar to Embodiment 1, the band size can be adapted to the (min,max) values of the samples of some components (Figure 6 - right). The value of (min;max) can be derived from the analysis of the reconstructed picture (or slice, or region in the picture) (410) or it can be derived from the adaptive clipping information coded in the bitstream.

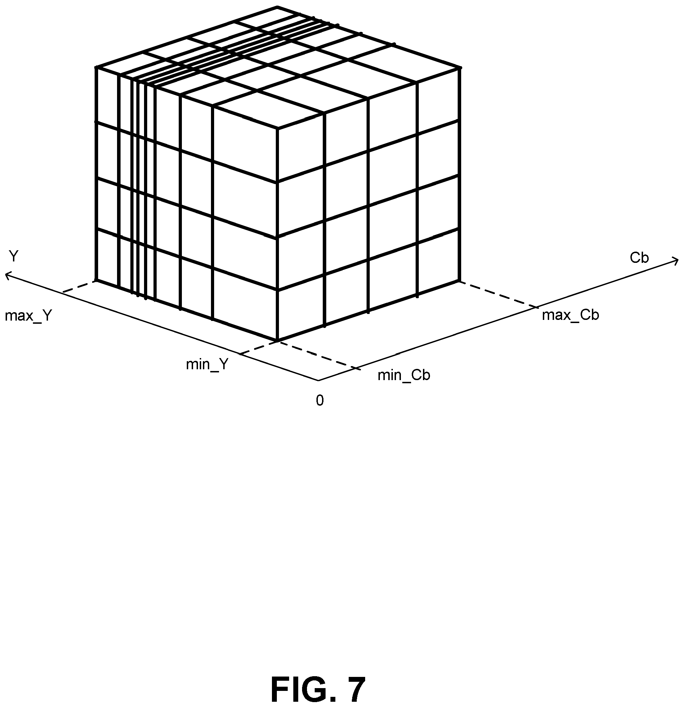

Non-uniform 3D histograms can be used. Such a non-uniform histogram is shown in Figure 7, for example. The non-uniform 3D histogram can be built so that each 3D band contains approximately a same number of samples. For example, one can start building a 3D histogram with (significantly) more bands than the targeted *nb_class.* Next the smallest bands can be merged/fused iteratively up to obtaining *nb_class* bands which can contain approximately a same number of samples.

**Embodiment 4** - **Generalization**

The filter can be ALF, CC-ALF, SAO or CCSAO.

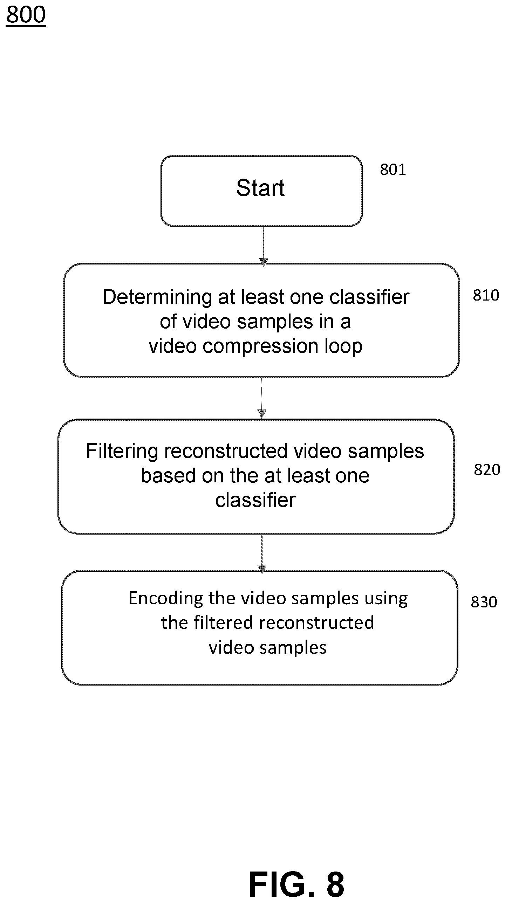

One embodiment of a method 800 under the general aspects described here is shown in Figure 8. The method commences at start block 801 and control proceeds to block 810 for determining at least one classifier of video samples in a video compression loop. Control proceeds from block 810 to block 820 for filtering reconstructed video samples based on the at least one classifier. Control proceeds from block 820 to block 830 for encoding the video samples using the filtered reconstructed video samples.

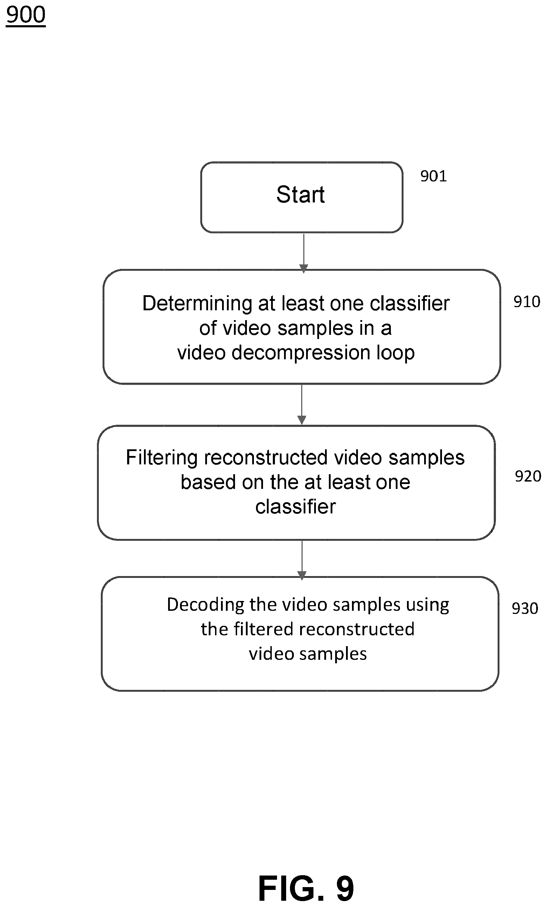

Another embodiment of a method 900 under the general aspects described here is shown in Figure 9. The method commences at start block 901 and control proceeds to block 910 for determining at least one classifier of video samples in a video decompression loop. Control proceeds from block 910 to block 920 for filtering reconstructed video samples based on the at least one classifier. Control proceeds from block 920 to block 930 for decoding the video samples using the filtered reconstructed video samples.

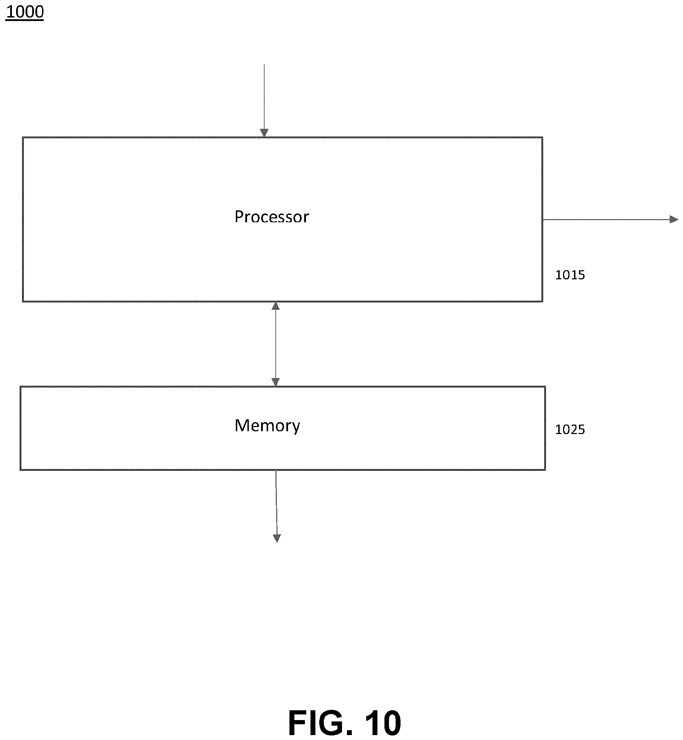

Figure 10 shows one embodiment of an apparatus 1000 for encoding, decoding, compressing or decompressing, or filtering of video data using the aforementioned methods. The apparatus comprises Processor 1015 and can be interconnected to a memory 1025 through at least one port. Both Processor 1015 and memory 1025 can also have one or more additional interconnections to external connections.

Processor 1015 is also configured to either insert or receive information in a bitstream and, either compressing, encoding, or decoding using any of the described aspects.

The embodiments described here include a variety of aspects, including tools, features, embodiments, models, approaches, etc. Many of these aspects are described with specificity and, at least to show the individual characteristics, are often described in a manner that can sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

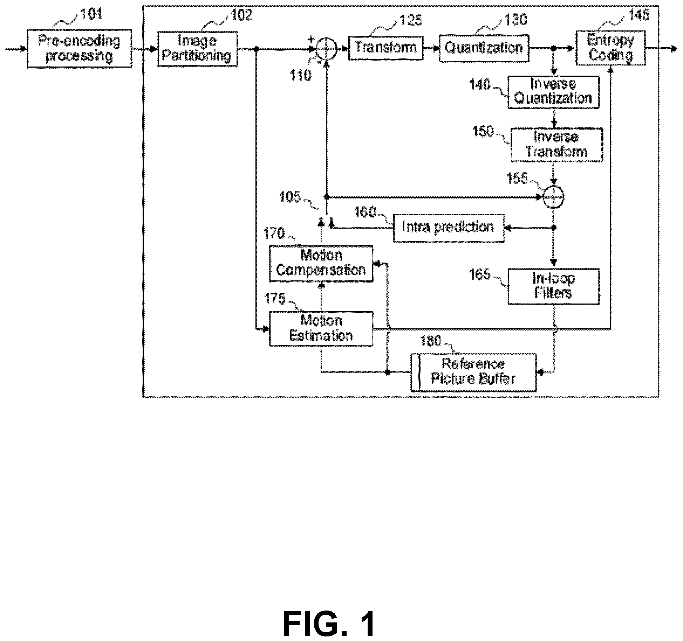

The aspects described and contemplated in this application can be implemented in many different forms. Figures 1, 2, and 11 provide some embodiments, but other embodiments are contemplated and the discussion of Figures 1, 2, and 11 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" can be used interchangeably, the terms "pixel" and "sample" can be used interchangeably, the terms "image," "picture" and "frame" can be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions can be modified or combined.

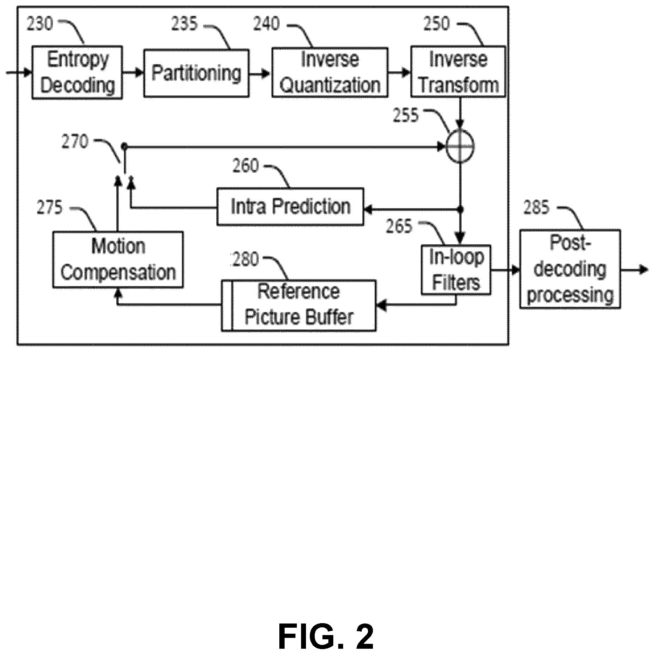

Various methods and other aspects described in this application can be used to modify modules, for example, the intra prediction, entropy coding, and/or decoding modules (160, 260, 145, 230), of a video encoder 100 and decoder 200 as shown in Figure 1 and Figure 2. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application. The specific values are for example purposes and the aspects described are not limited to these specific values.

Figure 1 illustrates an encoder 100. Variations of this encoder 100 are contemplated, but the encoder 100 is described below for purposes of clarity without describing all expected variations.

Before being encoded, the video sequence can go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 2 illustrates a block diagram of a video decoder 200. In the decoder 200, a bitstream is decoded by the decoder elements as described below. Video decoder 200 generally performs a decoding pass reciprocal to the encoding pass as described in Figure 1. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder can therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

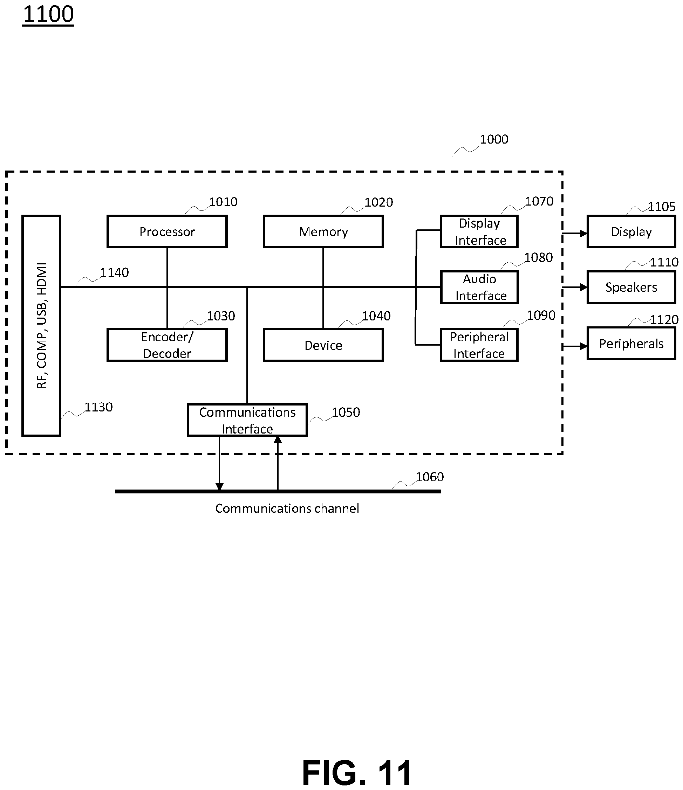

Figure 11 illustrates a block diagram of an example of a system in which various aspects and embodiments are implemented. System 1100 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1100, singly or in combination, can be embodied in a single integrated circuit (IC), multiple ICs, and/or discrete components. For example, in at least one embodiment, the processing and encoder/decoder elements of system 1100 are distributed across multiple ICs and/or discrete components. In various embodiments, the system 1100 is communicatively coupled to one or more other systems, or other electronic devices, via, for example, a communications bus or through dedicated input and/or output ports. In various embodiments, the system 1100 is configured to implement one or more of the aspects described in this document.

The system 1100 includes at least one processor 1010 configured to execute instructions loaded therein for implementing, for example, the various aspects described in this document. Processor 1010 can include embedded memory, input output interface, and various other circuitries as known in the art. The system 1100 includes at least one memory 1020 (e.g., a volatile memory device, and/or a non-volatile memory device). System 1100 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1100 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1100 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1100 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High-Definition Multimedia Interface (HDMI) input terminal. Other examples, not shown in Figure 11, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1100 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1100 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1100 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1100, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1100 using a set-top box that delivers the data over the HDMI connection of the input block 1130. Still other embodiments provide streamed data to the system 1100 using the RF connection of the input block 1130. As indicated above, various embodiments provide data in a non-streaming manner. Additionally, various embodiments use wireless networks other than Wi-Fi, for example a cellular network or a Bluetooth network.

The system 1100 can provide an output signal to various output devices, including a display 1105, speakers 1110, and other peripheral devices 1120. The display 1105 of various embodiments includes one or more of, for example, a touchscreen display, an organic light-emitting diode (OLED) display, a curved display, and/or a foldable display. The display 1105 can be for a television, a tablet, a laptop, a cell phone (mobile phone), or another device. The display 1105 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1100. For example, a disk player performs the function of playing the output of the system 1100.

In various embodiments, control signals are communicated between the system 1100 and the display 1105, speakers 1110, or other peripheral devices 1120 using signaling such as AV.Link, Consumer Electronics Control (CEC), or other communications protocols that enable device-to-device control with or without user intervention. The output devices can be communicatively coupled to system 1100 via dedicated connections through respective interfaces 1070, 1080, and 1090. Alternatively, the output devices can be connected to system 1100 using the communications channel 1060 via the communications interface 1050. The display 1105 and speakers 1110 can be integrated in a single unit with the other components of system 1100 in an electronic device such as, for example, a television. In various embodiments, the display interface 1070 includes a display driver, such as, for example, a timing controller (T Con) chip.

The display 1105 and speaker 1110 can alternatively be separate from one or more of the other components, for example, if the RF portion of input 1130 is part of a separate set-top box. In various embodiments in which the display 1105 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments can refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches can be based on an extensive testing of all encoding options, including all considered modes or coding parameters values, with a complete evaluation of their coding cost and related distortion of the reconstructed signal after coding and decoding.

Faster approaches can also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application can refer to "determining" various pieces of information. Determining the information can include one or more of, for example, estimating the information, calculating the information, predicting the information, or retrieving the information from memory.

Further, this application can refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application can refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:

At least one embodiment comprises classifying signals in a compression/decompression system based on signal characteristics.

At least one embodiment comprises the preceding embodiment, further comprising filtering in-loop signals according to the classification.

At least one embodiment comprises any encoding or decoding operation based on the above operations.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

**Claims**

1. A method, comprising:

   determining at least one classifier of video samples in a video compression loop;
   filtering reconstructed video samples based on the at least one classifier; and,
   encoding the video samples using the filtered reconstructed video samples.

2. An apparatus, comprising:

   a memory, and
   a processor, configured to:

   determine at least one classifier of video samples in a video compression loop;
   filter reconstructed video samples based on the at least one classifier; and,
   encode the video samples using the filtered reconstructed video samples.

3. A method, comprising:

   determining at least one classifier of video samples in a video decompression loop;
   filtering reconstructed video samples based on the at least one classifier; and,
   decoding the video samples using the filtered reconstructed video samples.

4. An apparatus, comprising:

   a memory, and
   a processor, configured to:

   determine at least one classifier of video samples in a video decompression loop;
   filter reconstructed video samples based on the at least one classifier; and,
   decode the video samples using the filtered reconstructed video samples.

5. The method of any one of Claims 1 or 3, or the apparatus of any one of Claims 2 or 4, wherein determination of at least one classifier is based on information from a region of video samples larger than a coding tree unit.

6. The method of any one of Claims 1 or 3, or the apparatus of any one of Claims 2 or 4, wherein determination of at least one classifier is based on information from a frame of video samples.

7. The method of any one of Claims 1 or 3, or the apparatus of any one of Claims 2 or 4, wherein determination of at least one classifier is based on information in a bitstream.

8. The method of any one of Claims 1, 3, 5, or 6, or the apparatus of any one of Claims 2, 4, 5, or 6, wherein determination of at least one classifier is based on analysis of reconstructed video samples.

9. The method of any one of Claims 1, 3, 5, 6, or 8, or the apparatus of any one of Claims 2, 4, 5, 6, or 8, wherein adaptive parameters of the at least one classifier comprise at least one of band size, minimum and maximum values, lookup table information, and clipping information.

10. The method of any one of Claims 1, 3, 5, 6, 8, or 9, or the apparatus of any one of Claims 2, 4, 5, 6, 8, or 9, wherein separate classifiers are used for different video components.

11. The method of any one of Claims 1, 3, 5, 6, 8, 9, or 10, or the apparatus of any one of Claims 2, 4, 5, 6, 8, 9, or 10, wherein filtering is performed by a filter comprising an adaptive loop filter, a cross component adaptive loop filter, a sample adaptive offset filter, or a cross component sample adaptive offset filter.

12. The method of any one of Claims 1, 3, 5, 6, or 8 through 11, or the apparatus of any one of Claims 2, 4, 5, 6, or 8 through 11, wherein reconstructed sample-based data is used for classification, comprising residual samples.

13. A device comprising:

   an apparatus according to Claim 2; and
   at least one of (i) an antenna configured to receive a signal, the signal including a video block, (ii) a band limiter configured to limit the received signal to a band of frequencies that includes the video block, and (iii) a display configured to display an output representative of the video block.

14. A non-transitory computer readable medium containing data content generated according to the method of Claim 1, for playback using a processor.

15. A non-transitory computer readable storage medium containing program code which, when the program code is executed by a computer, cause the computer to carry out the method of Claim 3, for playback using a processor.

**FIG. 1**

FIG. 2

**Starting band position**

**Minimum pixel value**

**Signal four offsets from starting band**

**Maximum pixel value**

# FIG. 3

Collocated & neighboring Y    Collocated U    Collocated V

# FIG. 4

**FIG. 5**

# FIG. 6

# FIG. 7

800

Start 801

Determining at least one classifier
of video samples in a
video compression loop 810

Filtering reconstructed video samples
based on the at least one
classifier 820

Encoding the video samples using
the filtered reconstructed
video samples 830

# FIG. 8

900

Start 901

Determining at least one classifier
of video samples in a
video decompression loop 910

Filtering reconstructed video samples
based on the at least one
classifier 920

Decoding the video samples using
the filtered reconstructed
video samples 930

# FIG. 9

1000

Processor

1015

Memory

1025

# FIG. 10

1100

**FIG. 11**

Europäisches
Patentamt

European
Patent Office

Office européen
des brevets

## EUROPEAN SEARCH REPORT

**Application Number**

EP 24 30 5435

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/320973 A1 (XU QIAN [US] ET AL) 20 December 2012 (2012-12-20) <br> * figure 1 * <br> * paragraph [0036] * <br> * paragraph [0058] - paragraph [0061] * <br> - - - - - | 1-7,11, 13-15 | INV. <br> H04N19/117 <br> H04N19/14 <br> H04N19/172 <br> H04N19/182 <br> H04N19/82 |
| X | US 2022/103825 A1 (RUSANOVSKYY DMYTRO [US] ET AL) 31 March 2022 (2022-03-31) <br> * paragraph [0006] * <br> * paragraph [0164] * <br> - - - - - | 1-4,7,8, 11-15 | |
| X | WO 2024/016981 A1 (MEDIATEK INC [CN]) 25 January 2024 (2024-01-25) <br> * figure 1A * <br> * page 12, line 7 - page 14, line 9 * <br> - - - - - | 1-15 | |
| A | CUI (QUALCOMM) K ET AL: "EE2-4.1: Adaptive clipping with signalled lower and upper bounds", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), <br> , <br> no. JVET-AG0145 <br> 10 January 2024 (2024-01-10), XP030314092, Retrieved from the Internet: URL:https://jvet-experts.org/doc_end_user/ documents/33_Teleconference/wg11/JVET-AG01 45-v1.zip JVET-AG0145-Test4.1a-v1.docx [retrieved on 2024-01-10] <br> * sections 1 and 2 * <br> - - - - - | 7,9 | TECHNICAL FIELDS SEARCHED (IPC) <br><br> H04N |

The present search report has been drawn up for all claims

| Place of search | Date of completion of the search | Examiner |
|---|---|---|
| Munich | 17 July 2024 | Regidor Arenales, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................................................
& : member of the same patent family, corresponding
document

EPO FORM 1503 03.82 (P04C01)

# EP 4 625 980 A1

## ANNEX TO THE EUROPEAN SEARCH REPORT
## ON EUROPEAN PATENT APPLICATION NO.

EP 24 30 5435

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2024

| Patent document cited in search report | Publication date | Patent family member(s) | Publication date |
|---|---|---|---|
| US 2012320973 A1 | 20-12-2012 | CN 102792690 A | 21-11-2012 |
| | | CN 105872554 A | 17-08-2016 |
| | | EP 2545711 A1 | 16-01-2013 |
| | | JP 6029984 B2 | 24-11-2016 |
| | | JP 2013522956 A | 13-06-2013 |
| | | KR 20130030254 A | 26-03-2013 |
| | | US 2012320973 A1 | 20-12-2012 |
| | | WO 2011112237 A1 | 15-09-2011 |
| US 2022103825 A1 | 31-03-2022 | CN 116210222 A | 02-06-2023 |
| | | EP 4222967 A1 | 09-08-2023 |
| | | KR 20230075443 A | 31-05-2023 |
| | | TW 202215846 A | 16-04-2022 |
| | | US 2022103825 A1 | 31-03-2022 |
| | | WO 2022072121 A1 | 07-04-2022 |
| WO 2024016981 A1 | 25-01-2024 | TW 202406338 A | 01-02-2024 |
| | | WO 2024016981 A1 | 25-01-2024 |

EPO FORM P0459

For more details about this annex : see Official Journal of the European Patent Office, No. 12/82